# EUROPEAN PATENT SPECIFICATION

(11) **EP 2 336 738 B1**
(45) Date of publication and mention of the grant of the patent: **12.09.2012**
(21) Application number: 09179738.1
(22) Date of filing: 17.12.2009
(51) Int. Cl.: G01J 3/02, G01J 3/433, G01N 21/39

(54) **Apparatus for reducing fringe interference of light created in the optical system of a laser spectroscopy system**
Vorrichtung zur Verringerung des Etaloneffekts von Licht, das in einem optischen System eines Laserspektroskopiesystems erzeugt wird
Appareil pour réduire l'effet d'étalon dans le système optique d'un système de spectroscopie laser

(43) Date of publication of application: 22.06.2011
(73) Proprietor: SIEMENS AKTIENGESELLSCHAFT, 80333 München (DE)
(72) Inventor: Kluczynski, Pawel, 42161 Vastra Frölunda (SE); Larking, Rikard, 44836 Floda (SE); Lock, Tomas E., 41728 Göteborg (SE)

(56) References cited:
- EP-A1- 1 927 831
- US-A- 4 684 258
- US-A- 4 934 816
- US-A- 5 636 035

## Description

The invention relates to an apparatus for reducing fringe interference of light created in the optical system of a laser spectroscopy system, said apparatus comprising:
- an optical element of the system arranged on a cantilever body which is at one end attached to a base via a flexural pivot and at the other free end coupled to an electromagnetic actuator for generating, along the laser path, physical translational vibration of the optical element and
- control unit providing a driver signal for the actuator.

Such an apparatus is known from EP 1 927 831 A1.

The dominating source of background and noise in laser absorption spectrometry is creation of spurious standing optical waves in the optical system, so called etalon effects. The etalon effects are created by multiple reflections from various optical surfaces, like mirrors, windows, etc. The etalon effects manifest themselves in the detected signal as interference fringes that can easily obscure the analytical signal from a sample. Etalon effects are extremely difficult to eliminate even if high quality anti-reflection coating is used. As the interference pattern is deterministic rather than random, normal averaging of the laser scans fails to reduce the interferences. One well known effective way to reduce the fringes is to vary the path length of the stray components by vibrating the position of the optical component that contributes to creation of etalon signal. US 4,684,258 proposes insertion of a vibrating Brewster plate between two etalon creating surfaces and thus periodically changing the optical path length of the etalon. US 4,934,816 proposes a similar mechanical approach, where etalon effects in a multipass cell are reduced by introducing a vibrating mirror. In both cases the vibration frequency is asynchronous with the laser modulation frequency so that the fringe pattern due to etalon effects will be averaged out.

Further, both approaches use a triangular waveform to drive the plate and mirror into oscillation, respectively. The triangular waveform offers better etalon fringe reduction compared to square or sinus waveforms because the time spent by the vibrating element at the turning points is minimized. Unfortunately, this approach has two drawbacks. Firstly, generation of a triangular waveform requires a highly linear electromechanical transducer and imposes high requirements on the electromechanical setup. Secondly, in practice, the vibration amplitude of the optical element has to be more than 30 FSRs (Free Spectral Ranges) or 15 laser wavelengths to obtain a sufficient reduction of the etalon effect. This becomes especially impractical when longer laser wavelengths are used thus imposing higher power consumption and putting higher demand on the mechanical components. Existing commercial instruments, which typically use vibration transition harmonic wavelengths in the range of 0.76 to 1.5 µm, would then require vibration amplitudes from around 10 to 25 µm. However, since optimal laser wavelengths for laser spectroscopy are between 3 to 20 µm where strong absorption signals exist due to molecular vibration transitions, larger vibrations amplitudes in order to reduce the etalon interference signal efficiently would be required, thus increasing the vibration amplitude from around 10 to 25 µm to around 45 to 300 µm. As standard piezo-transducers have limited length expansion capabilities, their use will become virtually impossible for the lasers with longer wavelengths.

The above-mentioned EP 1 927 831 A1 discloses varying the optical path length of the passive optical cavity with a Gaussian (normal) distribution, where the standard deviation is at least one-quarter of the light's wavelength. Thus, compared to the triangle modulation which needs vibration amplitudes over several laser wavelengths, an efficient etalon averaging is obtained already at amplitudes following a Gaussian distribution with a standard deviation slightly above one-quarter wavelength. Another advantage is that, due to character of noise modulation, there is no need of amplitude and phase control of the modulating waveform, thus allowing much simpler hardware design. On the other hand, the random (noise) modulation contains high frequency components which exert higher acceleration forces on the moving mechanics.

All the known approaches use an open loop piezoelectric actor for vibrationally moving the optical component that contributes to creation of etalon signal.

The invention seeks to provide an improved apparatus for reducing fringe interference of light created in the optical system of a laser spectroscopy system, especially with longer wavelengths and adapted for vibrating the position of the optical component that contributes to creation of the etalon effect with a triangular waveform.

According to the invention this is achieved by the apparatus defined in claim 1.

Preferred embodiments of the apparatus according to the invention are specified in the remaining claims.

Thus, the apparatus according to the invention is characterized in that
- the driver signal is triangular,
- a vibration sensor is attached to the cantilever body and provides the actual vibration value, and
- a control means including a controller which receives the driver signal and the actual vibration value and is adapted to control the amplitude of said vibration in order to vibrate the optical element with a triangular waveform.

The apparatus according to the invention advantageously provides:
- a large vibration amplitude,
- a well controlled motion waveform and
- a robust low cost implementation.

The large amplitude is created by the cantilever body and its flexural mounting, where the mechanical design can be tailored to yield any needed amplitude. The flexural pivot can be made of several different materials where copper-beryllium materials are particularly suitable due to their excellent fatigue properties and their lower modulus (compared to steel materials) .

The mechanical system will by itself have two undesirable properties, a sinusoidal motion profile and a fixed resonance frequency. These undesirable properties are eliminated by adding a motion control system to the mechanical flexure, where the control means include a controller controlling the amplitude of said vibration and a vibration sensor attached to the cantilever body and providing the actual vibration value to the controller. The addition of a well designed control system increases the motion bandwidth from a few percent to a bandwidth large enough to reproduce a triangle wave with reasonable fidelity.

The cantilever body moment of inertia should be minimized while keeping the higher order resonance frequencies high enough so that they do not limit the performance of the control system. This will in general set the allowable higher order resonance frequencies to 3 to 10 times above the upper bandwidth of the control system. Thus, the combination of a mechanical flexure combined and a well designed control system gives large, well controlled motion profiles with sufficient bandwidth.

The electromechanical performance (motion fidelity in proportion to power consumption) can be advantageously optimized in that the optical element is arranged at a position between the ends of the cantilever body where the moment of inertia of the optical component around the pivot is at least substantially equal to that of the cantilever body.

The electromagnetic actuator is preferably of a moving magnet type having a magnet attached to the cantilever body and a drive coil attached to a support block. This simplifies the design, increases reliability and decreases the manufacturing costs. The magnet may be typically of the rare earth type, either Neodymium-Boron-Iron or Samarium-Cobalt types, as these have the needed magnetic energy to achieve a compact design.

In a very low cost arrangement, the vibration sensor comprises a sense coil interacting with the magnet of the electromagnetic actuator. Thus, the drive and sense coils and the magnet are combined into one unit, where both coils may be wound on the same bobbin. This simple low cost arrangement, however, will have transformer cross-coupling between the drive and sense coil which limits the performance of the control system somewhat. The cross-coupling can largely be cancelled out by electronic means. This arrangement would typically be used for systems low cost systems with lower motion frequencies, size restraints and somewhat lower triangle fidelity.

For higher motion frequencies, the actuator and sensor are preferably separated identical in construction. The vibration sensor is then of a moving magnet type having a further magnet attached to the cantilever body and a sense coil attached to the or another support block.

The present invention will be now described, by way of example, with reference to the accompanying drawings, in which:
Figure 1 is a schematic diagram of an embodiment of an apparatus for reducing fringe interference of light created in the optical system of a laser spectrometer,
Figure 2 is a detail of an alternative embodiment of the apparatus, and
Figure 3 is a transfer function diagram.

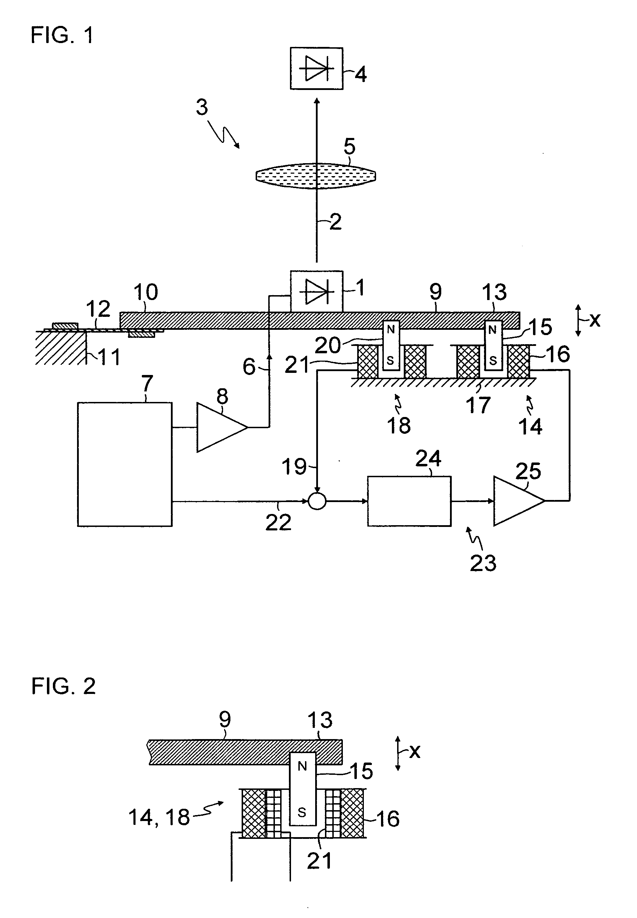

Figure 1 shows, as an example for the apparatus according to the invention, a simplified diagram of a laser spectrometer including a frequency tunable laser 1 for generating a laser beam 2 which passes through an optical system 3 onto an optical detector 4. The optical system 3 comprises, in addition to the active components 1 and 4, a sample cell (not shown) containing a trace gas species in a gas mixture and further optical elements, such as a collimating lens 5. The laser 1 is modulated with a triangular or sawtooth modulation signal 6 in order to sweep the laser wavelength across specific absorption lines of the trace gas to be determined. The modulation signal 6 is generated by a control unit 7 and applied via a laser driver 8 to the laser 1. The signal received at the optical detector 4 is demodulated to obtain an absorption induced signal.

Partially reflecting optical surfaces of the sample cell and of other optical elements of the optical system 3, such as windows or lenses, e.g. 5, form a passive optical cavity (etalon). This etalon may create an etalon effect when light reflected or scattered by the optical surfaces reaches the detector 4 and interferes with the primary beam 2. When the laser beam 2 propagates through the etalon, multiple reflections inside the etalon will give rise to standing waves, and in consequence the transmitted light intensity will vary periodically with the laser wavelength. As the laser wavelength is scanned, the optical transmission will follow a periodical pattern, the phase of which will depend on the total etalon length. This etalon fringe pattern may obscure the absorption signal of interest from the sample and thus affect the accuracy of the spectrometer. If the etalon length is changed exactly by ΔL = m•λ/4, where m is an odd number, the etalon fringe pattern at the laser wavelength λ will be reversed. Thus, by changing the etalon length back and forth, the unwanted periodic fringe pattern can be averaged out yielding flat optical transmission.

To vary the optical length of the passive cavity, the position of one of the optical elements, e.g. the laser 1 or the lens 5, is varied by vibration along the laser beam direction with a triangular back-and-forth movement x.

For that purpose the laser 1 is arranged on a cantilever body 9 which is at one end 10 attached to a base 11 via a flexural pivot 12 and at the other free end 13 coupled to an electromagnetic actuator 14. The laser 1 is arranged at a position between the ends 10 and 13 of the cantilever body 9 where the moment of inertia of the laser 1 around the pivot is at least substantially equal to that of the cantilever body 9. The actuator 14 is of a moving magnet type and comprises a magnet 15 attached to the cantilever body 9 and a drive coil 16 attached to a support block 17. Further, a vibration sensor 18 is attached to the cantilever body 9 for providing an actual vibration value 19. The vibration sensor 18 is of a moving magnet type, too, and comprises a further magnet 20 attached to the cantilever body 9 and a sense coil 21 attached to the support block 17.

The control unit 7 generates synchronously with the laser modulation signal 6 a triangular vibrator driver signal 22 which is fed to a control means 23 for controlling the vibration movement x of the cantilever body 9. The control means 23 includes the vibration sensor 18, a controller 24 and a driver 25 for the actuator 14.

As Figure 2 shows, the vibration sensor 18 may comprise a sense coil interacting with the magnet 15 of the electromagnetic actuator 14. Thus, the drive and sense coils 16, 21 and the magnet 15 are combined into one unit, where both coils 16, 21 may be wound on the same bobbin.

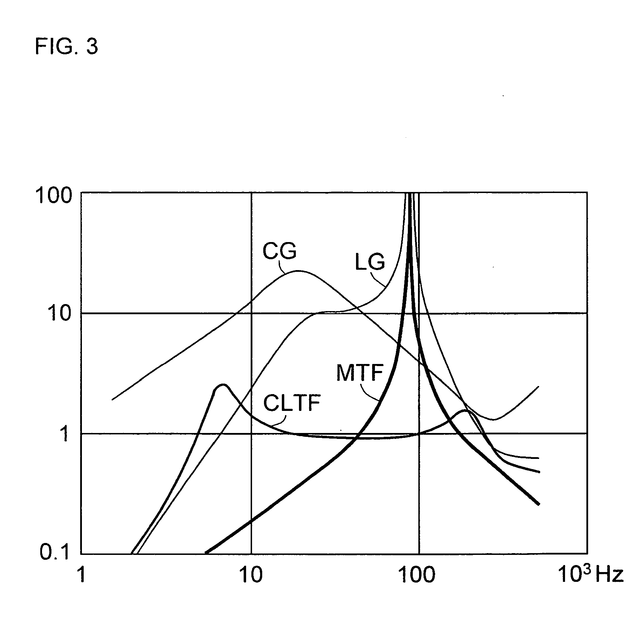

Figure 3 below shows an example on how the bandwidth of the mechanical resonance, the (mechanical transfer function MTF, is increased from a few Hz to more than 100 Hz (Closed loop transfer function CLTF) with the control loop. The Controller Gain CG and the mechanical transfer function MTF combine to the Loop Gain LG and the mechanical resonance is included inside the control loop. The controller gain CG drops off at lower frequencies below the nominal movement frequency to make the controller design easier.

In summary, the apparatus according to the invention gives the following benefits:
- The mechanical dimensions around the flexure can be adapted to easily achieve low fatigue loads that allow long life continuous operation where a typical application must achieve 10 Giga-cycles with high reliability.
- The mechanical arrangement can be adapted to different optical requirements and mass loads.
- Compared to piezo and moving coil actuators, the mechanical system is mechanically robust and compact.
- Reasonable variations in the mechanical parameters of the flexure are eliminated by the control system. This decreases the cost of the system and increases reliability and robustness.
- The apparatus can be manufactured from easily available standard parts from several different sources.
- The design is low cost.
- The actuator is designed to any suitable drive voltage.
- The actuator needs low drive power.

## Claims

1. An apparatus for reducing fringe interference of light created in the optical system (3) of a laser spectroscopy system, said apparatus comprising:
- an optical element (1) of the system (3) being arranged on a cantilever body (9) which is at one end (10) attached to a base (11) via a flexural pivot (12) and at the other free end (13) coupled to an electromagnetic actuator (14) for generating, along the laser path, physical translational vibration (x) of the optical element (1) and
- a control unit (9) providing a driver signal (22) for the actuator (14),
**characterized in that**
- the driver signal (22) is triangular,
- a vibration sensor (18) is attached to the cantilever body (9) and provides the actual vibration value (19), and
- a control means (23) including a controller (24) which receives the driver signal (22) and the actual vibration value (19) and is adapted to control the amplitude of said vibration (x) in order to vibrate the optical element (2) with a triangular waveform.

2. The apparatus of claim 1, **characterized in that** the optical element (1) is arranged at a position between the ends (10, 13) of the cantilever body (9) where the moment of inertia of the optical component (1) around the pivot is at least substantially equal to that of the cantilever body (9).

3. The apparatus of claim 1 or 2, **characterized in that** the electromagnetic actuator (14) is of a moving magnet type having a magnet (15) attached to the cantilever body (9) and a drive coil (16) attached to a support block (17).

4. The apparatus of claim 3, **characterized in that** the vibration sensor (18) comprises a sense coil (21) interacting with the magnet (15).

5. The apparatus of claim 3, **characterized in that** the vibration sensor (18) is of a moving magnet type having a further magnet (20) attached to the cantilever body (9) and a sense coil (21) attached to the or another support block (17).

## Patentansprüche

1. Vorrichtung zur Verringerung des Etaloneffekts von Licht, das in dem optischen System (3) eines Laserspektrokospiesystems erzeugt wird, wobei die Vorrichtung Folgendes umfasst:
- ein optisches Element (1) des Systems (3) ist auf einem Kragkörper (9) angebracht, der an einem Ende (10) an einer Basis (11) über ein Federgelenk (12) angebracht ist und an dem anderen freien Ende (13) an einen elektromagnetischen Aktuator (14) gekoppelt ist, um entlang des Laserpfads eine physikalische Translationsschwingung (x) des optischen Elements (1) zu generieren, und
- eine Steuereinheit (9) liefert ein Treibersignal (22) für den Aktuator (14),
**dadurch gekennzeichnet, dass**
- das Treibersignal (22) dreieckig ist,
- ein Schwingungssensor (18) an dem Kragkörper (9) angebracht ist und den tatsächlichen Schwingungswert (19) liefert, und
- ein Steuermittel (23) mit einem Controller (24), der das Treibersignal (22) und den tatsächlichen Schwingungswert (19) empfängt und ausgelegt ist zum Steuern der Amplitude der Schwingung (x), um das optische Element (2) mit einer dreieckigen Wellenform in Schwingungen zu versetzen.

2. Vorrichtung nach Anspruch 1, **dadurch gekennzeichnet, dass** das optische Element (1) an einer Position zwischen den Enden (10, 13) des Kragkörpers (9) angeordnet ist, wo das Trägheitsmoment der optischen Komponente (1) um das Gelenk herum mindestens im Wesentlichen gleich dem des Kragkörpers (9) ist.

3. Vorrichtung nach Anspruch 1 oder 2, **dadurch gekennzeichnet, dass** der elektromagnetische Aktuator (14) vom Typ mit beweglichen Magneten ist mit einem an dem Kragkörper (9) angebrachten Magneten (15) und einer an einen Stützblock (17) angebrachten Antriebsspule (16).

4. Vorrichtung nach Anspruch 3, **dadurch gekennzeichnet, dass** der Schwingungssensor (18) eine mit dem Magneten (15) interagierende Messspule (21) umfasst.

5. Vorrichtung nach Anspruch 3, **dadurch gekennzeichnet, dass** der Schwingungssensor (18) vom Typ mit beweglichen Magneten ist mit einem weiteren, an dem Kragkörper (9) angebrachten Magneten (20) und einer an dem oder einem anderen Stützblock (17) angebrachten Messspule (21).

## Revendications

1. Dispositif de réduction de l'interférence de frange de lumière créée dans le système (3) optique d'un système de spectroscopie laser, le dispositif comprenant :
- un élément (1) optique du système (3) agencé sur un corps (9) en porte-à-faux qui est à une extrémité (10) fixée à un socle (11) par un pivot (12) de flexion et à l'autre extrémité (13) libre couplé à un actionneur (14) électromagnétique pour produire le long du trajet laser une vibration (x) physique de translation de l'élément (1) optique et
- une unité (9) de commande fournissant un signal (22) d'attaque de l'actionneur (14),
**caractérisé en ce que**
- le signal (22) d'attaque est triangulaire,
- un capteur (18) de vibration est fixé au corps (9) en porte-à-faux et fournit la valeur (19) réelle de vibration, et
- un moyen (23) de commande comprenant une unité (24) de commande, qui reçoit le signal (22) d'attaque et la valeur (19) réelle de vibration et est conçue pour commander l'amplitude de la vibration (x) afin de faire vibrer l'élément (2) optique par une forme d'onde triangulaire.

2. Dispositif suivant la revendication 1, **caractérisé en ce que** l'élément (1) optique est mis en une position entre les extrémités (10, 13) du corps (9) en porte-à-faux où le couple d'inertie du composant (1) optique autour du pivot est au moins sensiblement égal à celui du corps (9) en porte-à-faux.

3. Dispositif suivant la revendication 1 ou 2, **caractérisé en ce que** l'actionneur (14) électromagnétique est d'un type à aimant mobile ayant un aimant (15) fixé au corps (9) en porte-à-faux et une bobine (16) d'entraînement fixée à un bloc (17) de support.

4. Dispositif suivant la revendication 3, **caractérisé en ce que** le capteur (18) de vibration comprend une bobine (21) de détection interagissant avec l'aimant (15).

5. Dispositif suivant la revendication 3, **caractérisé en ce que** le capteur (18) de vibration est d'un type à aimant mobile ayant un autre aimant (20) fixé au corps (9) en porte-à-faux et une bobine (21) de détection fixée au bloc (17) de support ou à un autre bloc (17) de support.
